# EUROPÄISCHE PATENTANMELDUNG

(11) **EP 1 818 657 A2**
(43) Veröffentlichungstag der Anmeldung: **15.08.2007**
(21) Anmeldenummer: 07002831.1
(22) Anmeldetag: 09.02.2007
(51) Int. Cl.: G01G 21/23

(54) **Tragwerk mit einer Vorrichtung zur Messung und/oder zur Überwachung der Tragwerkbelastung**

(30) Priorität: 09.02.2006 DE 102006006210
(71) Anmelder: Soehnle Professional GmbH & Co. KG, 71540 Murrhardt (DE)
(72) Erfinder: Gerster, Stephan, 53498 Bad Breisig (DE); Schläger, Michael, 69207 Sandhausen (DE); Stahl, Albrecht, 71560 Sulzbach (DE)
(74) Vertreter: Ullrich & Naumann

(57) **Zusammenfassung**

Ein Tragwerk weist eine Vorrichtung zur Messung und/oder zur Überwachung der Tragwerkbelastung auf. Die Vorrichtung zur Messung und/oder zur Überwachung der Tragwerkbelastung beinhaltet beispielsweise zumindest eine Kraftmessvorrichtung, insbesondere eine Wägzelle.

## Beschreibung

Die Erfindung betrifft ein Tragwerk und eine Nachrüstsatz für ein Tragwerk.

Insbesondere durch Schneebelastung kommt es zu Einstürzen von Tragwerken und Tragwerke beinhaltenden Bauwerken, wie Dächern, Gebäuden und Brücken.

Tragwerke werden bei ihrer Erstellung derart ausgelegt, dass sie allen vorhersehbaren Belastungen standhalten. Es wird jedoch nicht berücksichtigt, dass die Belastbarkeit der Tragwerke mit der Zeit durch Alterung oder durch Beschädigung in gefährlicher Weise nachlassen kann.

Der Erfindung liegt die Aufgabe zugrunde, ein sichereres Tragwerk anzugeben.

Die Aufgabe wird durch ein Tragwerk gelöst, das dadurch gekennzeichnet ist, dass das Tragwerk eine Vorrichtung zur Messung und/oder zur Überwachung der Tragwerkbelastung aufweist.

Der Erfindung liegt die weitere Aufgabe zugrunde, eine Überwachung der Einsturzgefahr für bestehende Tragwerke zu ermöglichen.

Die Aufgabe wird durch einen Nachrüstsatz zur Montage an einem Tragwerk gelöst, der eine Vorrichtung zur Messung und/oder zur Überwachung der Tragwerkbelastung beinhaltet.

Die Erfindung hat den Vorteil, dass ähnlich wie bei einem Schutz vor Bränden durch Feuermelder, eine ständige Überwachung des Tragwerkes ermöglicht ist und so auch ein Nachlassen der Tragfähigkeit einfach und effizient feststellbar ist. Lange vor einem möglichen Einsturz eines Bauwerkes können, dank der erfindungsgemäßen Überwachung, geeignete Maßnahmen zur Absicherung getroffen werden.

In einer vorteilhaften Ausführung weist die Vorrichtung zur Messung und/oder zur Überwachung der Tragwerkbelastung zumindest eine Kraftmessvorrichtung, insbesondere eine Wägzelle, auf.

Das Tragwerk kann zumindest ein Lager für einen Träger aufweisen, wobei die Kraftmessvorrichtung die auf das Lager einwirkende Kraft misst. Beispielsweise kann die Kraftmessvorrichtung unter dem Lager angeordnet sein.

In einer weiteren vorteilhaften Ausführung weist das Tragwerk zumindest zwei verbundene Tragelemente auf, wobei die Kraftmessvorrichtung im Bereich der Verbindung angeordnet ist. Beispielsweise kann die Kraftmessvorrichtung Bestandteil eines Verbindungsbauteils zwischen zumindest zwei Tragelementen sein.

Die Kraftmessvorrichtung kann mit Hilfe von Dehnmessstreifen und/oder induktiv und/oder kapazitiv und/oder optisch arbeiten.

Zur induktiven und/oder kapazitiven Messung kann die Kraftmessvorrichtung eine Vorrichtung zur Erfassung von magnetischen und/oder elektrischen Feldänderungen aufweisen.

In einer ganz besonders vorteilhaften Ausführung ist die Kraftmessvorrichtung als Bolzen und/oder als Schraube ausgebildet. In einer Ausführung ist vorgesehen, dass der Bolzen und/oder die Schraube zwei gegen eine Rückstellkraft relativ zueinander bewegliche Bauteile, insbesondere Enden, aufweist, deren Relativabstand eine Messvorrichtung erfasst. Ferner kann vorgesehen sein, dass die Messvorrichtung den Relativabstand zueinander bewegliche Bauteile des Bolzens bzw. der Schraube mit Hilfe von Dehnmessstreifen und/oder induktiv und/oder kapazitiv und/oder optisch erfasst.

In einer anderen vorteilhaften Ausführung ist ein Tragelement des Tragwerks, beispielsweise ein Träger, Bestandteil einer Kraftmesseinrichtung. Eine solche Konstellation ergibt sich vorteilhafter Weise aus der Nachrüstung eines bestehenden Tragwerks.

Vorteilhafter weise kann vorgesehen sein, dass die Vorrichtung zur Messung und/oder zur Überwachung der Tragwerkbelastung die Durchbiegung und/oder die Dehnung zumindest eines Tragelement, beispielsweise eines Trägers, misst.

In einer vorteilhaften Ausführung ist die Vorrichtung zur Messung und/oder zur Überwachung der Tragwerkbelastung mechanisch parallel zu einem Tragelement angeordnet. Beispielsweise können zwei voneinander beanstandete Halteelemente an dem Tragelement - vorzugsweise formschlüssig - angeordnet sein, zwischen denen eine Kraftmessvorrichtung und/oder eine Abstandsmessvorrichtung angeordnet ist. Auf diese Weise kann eine Längenänderung und/oder Biegung des Tragelements gemessen bzw. überwacht werden.

In einer vorteilhaften Ausführung weist die Vorrichtung zur Messung und/oder zur Überwachung der Tragwerkbelastung zumindest einen an einem Tragelement, beispielsweise an einem Träger, angeordneten Dehnmessstreifen auf.

In einer besonderen Ausführung weist die Vorrichtung zur Messung und/oder zur Überwachung der Tragwerkbelastung zumindest eine Abstandsmessvorrichtung auf. Dies kann beispielsweise optisch (z.B. interferometrisch) arbeiten. Vorzugsweise weist die Abstandsmessvorrichtung zumindest eine Lichtquelle und zumindest einen Lichtdetektor auf. Ferner können, beispielsweise um mehrere Tragelemente gleichzeitig überwachen zu können Umlenkspiegel vorgesehen sein, die an den Tragelementen angeordnet sind.

In einer vorteilhaften Ausführung misst die Abstandsmessvorrichtung den Abstand eines Trägers, zu einem Fixpunkt misst. In einer anderen Ausführung misst die Abstandsmessvorrichtung den Abstand eines Tragelements, beispielsweise eines Trägers, zu einem anderen Tragelement. Vorzugsweise misst die Abstandsmessvorrichtung die Abstände mehrerer Tragelement, beispielsweise Träger und/oder Verbindungsbauteile und/oder Wände, zueinander.

Die Vorrichtung zur Messung und/oder zur Überwachung der Tragwerkbelastung ist vorzugsweise fest in das Tragwerk integriert ist. Es ist jedoch auch möglich ein bestehendes Tragwerk nachzurüsten.

Vorzugsweise umfasst die Überwachung der Tragwerkbelastung eine Messung in regelmäßigen und/oder unregelmäßigen zeitlichen Abständen.

In einer vorteilhaften Ausführung ist vorgesehen, dass die Überwachung der Tragwerkbelastung - beispielsweise elektronisch gesteuert - automatisch erfolgt.

In einer vorteilhaften Ausführung zeigt die Vorrichtung zur Messung und/oder zur Überwachung der Tragwerkbelastung die gemessenen Tragwerkbelastungswerte beispielsweise auf einem Display an. Es kann auch vorgesehen sein, dass er zeitliche Verlauf der Messwerte abgespeichert wird und später - beispielsweise mit einem Auslesegerät - abrufbar ist.

Es kann darüber hinaus vorgesehen sein, dass die Vorrichtung zur Messung und/oder zur Überwachung der Tragwerkbelastung die gemessenen Tragwerkbelastungswerte an eine Überwachungsstation, beispielsweise die Feuerwahr, übermittelt.

In einer ganz besonders vorteilhaften Ausführung gibt die Vorrichtung zur Messung und/oder zur Überwachung der Tragwerkbelastung bei Erreichen einer - vorzugsweise einstellbaren - Belastungsgrenze ein Warnsignal, beispielsweise optisch und/oder akustisch, aus. Dies Ermöglicht es, ein vom Einsturz bedrohtes Bauwerk rechtzeitig zu evakuieren.

In einer vorteilhaften Ausführung weist die Vorrichtung zur Messung und/oder zur Überwachung der Tragwerkbelastung ein Netzwerk von Kraftmessvorrichtungen und/oder Abstandsmessvorrichtungen auf.

Es kann vorteilhafter Weise vorgesehen sein, dass die Vorrichtung zur Messung und/oder zur Überwachung der Tragwerkbelastung eine Verarbeitungseinheit, beispielsweise einen PC, zur Verarbeitung der Messwerte mehrerer Kraftmessvorrichtungen und/oder Abstandsmessvorrichtungen aufweist.

Der erfindungsgemäße Nachrüstsatz kann vorteilhafter Weise derart ausgebildet sein, dass der Bolzen und/oder die Schraube der Kraftmessvorrichtung eine im Tragwerk an dem der Nachrüstsatz montiert wird vorhandene Schraube oder einen im Tragwerk an dem der Nachrüstsatz montiert wird vorhandenen Bolzen oder eine im Tragwerk an dem der Nachrüstsatz montiert wird vorhandene Niete ersetzt.

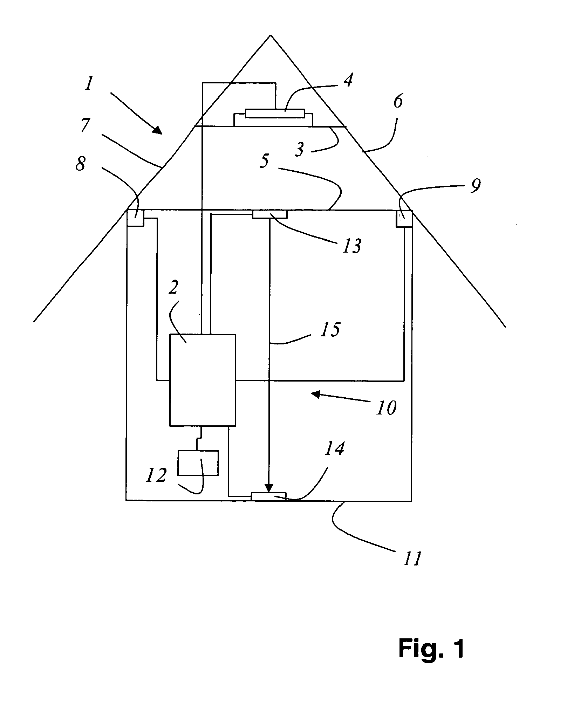

In der Zeichnung ist der Erfindungsgegenstand schematisch dargestellt und wird anhand der Figuren nachfolgend beschrieben, wobei gleich wirkende Elemente mit denselben Bezugszeichen versehen sind.

Die Figur zeigt ein Haus mit einem Dach, das ein Tragwerk 1 beinhaltet. Das Tragwerk weist eine Vorrichtung zur Messung und/oder zur Überwachung der Tragwerkbelastung auf. Die Vorrichtung zur Messung und/oder zur Überwachung der Tragwerkbelastung weist ein Netzwerk von Kraftmessvorrichtungen und/oder Abstandsmessvorrichtungen auf. Ferner ist eine Verarbeitungseinheit 2 zur Verarbeitung der Messwerte mehrerer Kraftmessvorrichtungen und/oder Abstandsmessvorrichtungen vorgesehen.

Das Tragwerk beinhaltet ein erstes Tragelement 3,an dem - mechanisch parallel - zwischen zwei Halterungen - eine Kraftmessvorrichtung 4 angeordnet ist. Die Kraftmessvorrichtung 4 gibt ihre Messwerte an die Verarbeitungseinheit 2 weiter.

Das Tragwerk beinhaltet ein zweites Tragelement 5, das jeweils mit einem dritten Tragelement 6 und einem vierten Tragelement 7 verbunden ist. An den Verbindungsstellen ist ein zweite Kraftmessvorrichtung 8 und eine dritte Kraftmessvorrichtung 9 angeordnet. Diese diesen gleichzeitig als Verbindungsschrauben und halten die verbundenen Tragelement e 5, 6, 7 zusammen. Die zweite und die dritte Kraftmessvorrichtungen 8, 9 geben ihre Messwerte an die Verarbeitungseinheit 2 weiter.

Zur Überwachung der Durchbiegung des Tragelementes 5 ist eine Abstandsmessvorrichtung 10, die den Relativabstand der Mitte des Tragelementes 5 zum Boden 11 in regelmäßigen zeitlichen Abständen misst. Die Abstandsmessvorrichtung 10 beinhaltet eine am Tragelement 5 angeordnete Lichtquelle 13, die einen Laserstrahl 15 aussendet und einen Detektor 14, der auf dem Boden 11 angeordnet ist. Die Messwerte der Abstandsmessvorrichtung 10 werden ebenfalls an die Verarbeitungseinheit 2 übertragen.

Die Verarbeitungseinheit 2 zweigt die Tragwerkbelastung auf einem Display 12 an. Ferner wird bei Überbelastung des Tragwerkes - beispielsweise durch Schneelast - ein Warnton und ein optisches Warnsignal ausgegeben.

Die Erfindung wurde in Bezug auf eine besondere Ausführungsform beschrieben. Es ist jedoch selbstverständlich, dass Änderungen und Abwandlungen durchgeführt werden können, ohne dabei den Schutzbereich der nachstehenden Ansprüche zu verlassen.

## Patentansprüche

1. Tragwerk,
**dadurch gekennzeichnet, dass** das Tragwerk eine Vorrichtung zur Messung und/oder zur Überwachung der Tragwerkbelastung aufweist.

2. Tragwerk nach Anspruch 1, **dadurch gekennzeichnet, dass** die Vorrichtung zur Messung und/oder zur Überwachung der Tragwerkbelastung zumindest eine Kraftmessvorrichtung, insbesondere eine Wägzelle, aufweist und/oder
dass das Tragwerk zumindest ein Lager für einen Träger aufweist und dass die Kraftmessvorrichtung die auf das Lager einwirkende Kraft misst, wobei die Kraftmessvorrichtung unter dem Lager angeordnet sein kann.

3. Tragwerk nach Anspruch 2, **dadurch gekennzeichnet, dass** das Tragwerk zumindest zwei verbundene Tragelemente aufweist und dass die Kraftmessvorrichtung im Bereich der Verbindung angeordnet ist und/oder
dass die Kraftmessvorrichtung Bestandteil eines Verbindungsbauteils zwischen zumindest zwei Tragelementen ist und/oder
dass die Kraftmessvorrichtung mit Hilfe von Dehnmessstreifen und/oder induktiv und/oder kapazitiv und/oder optisch arbeitet und/oder
dass die Kraftmessvorrichtung ein Vorrichtung zur Erfassung von magnetischen und/oder elektrischen Feldänderungen aufweist und/oder
dass die Kraftmessvorrichtung als Bolzen und/oder als Schraube ausgebildet ist, wobei
der Bolzen und/oder die Schraube zwei gegen eine Rückstellkraft relativ zueinander bewegliche Bauteile, insbesondere Enden, aufweist, deren Relativabstand eine Messvorrichtung erfassen kann und wobei
die Messvorrichtung den Relativabstand zueinander bewegliche Bauteile des Bolzens bzw. der Schraube mit Hilfe von Dehnmessstreifen und/oder induktiv und/oder kapazitiv und/oder optisch erfassen kann.

4. Tragwerk nach einem der Ansprüche 1 bis 3, **dadurch gekennzeichnet, dass** ein Tragelement des Tragwerks, beispielsweise ein Träger, Bestandteil einer Kraftmesseinrichtung ist.

5. Tragwerk nach einem der Ansprüche 1 bis 4, **dadurch gekennzeichnet, dass** die Vorrichtung zur Messung und/oder zur Überwachung der Tragwerkbelastung die Durchbiegung zumindest eines Tragelement, beispielsweise eines Trägers, misst und/oder
dass die Vorrichtung zur Messung und/oder zur Überwachung der Tragwerkbelastung die Dehnung zumindest eines Tragelements, beispielsweise eines Trägers, misst und/oder
dass die Vorrichtung zur Messung und/oder zur Überwachung der Tragwerkbelastung mechanisch parallel zu einem Tragelement angeordnet ist und/oder
dass die Vorrichtung zur Messung und/oder zur Überwachung der Tragwerkbelastung zumindest einen an einem Tragelement, beispielsweise an einem Träger, angeordneten Dehnmessstreifen aufweist und/oder
dass die Vorrichtung zur Messung und/oder zur Überwachung der Tragwerkbelastung zumindest eine Abstandsmessvorrichtung aufweist, wobei die Abstandsmessvorrichtung optisch arbeiten kann und wobei
die Abstandsmessvorrichtung interferometrisch arbeiten kann.

6. Tragwerk nach Anspruch 5, **dadurch gekennzeichnet, dass** die Abstandsmessvorrichtung zumindest eine Lichtquelle und zumindest einen Lichtdetektor aufweist und/oder
dass die Abstandsmessvorrichtung zumindest einen Umlenkspiegel aufweist und/oder
dass die Abstandsmessvorrichtung den Abstand eines Trägers, zu einem Fixpunkt misst und/oder
dass die Abstandsmessvorrichtung den Abstand eines Tragelements, beispielsweise eines Trägers, zu einem anderen Tragelement misst und/oder
dass die Abstandsmessvorrichtung die Abstände mehrerer Tragelement, beispielsweise Träger und/oder Verbindungsbauteile und/oder Wände, zueinander misst.

7. Tragwerk nach einem der Ansprüche 1 bis 6, **dadurch gekennzeichnet, dass** die Vorrichtung zur Messung und/oder zur Überwachung der Tragwerkbelastung fest integriert ist.

8. Tragwerk nach einem der Ansprüche 1 bis 7, **dadurch gekennzeichnet, dass** die Überwachung der Tragwerkbelastung eine Messung in regelmäßigen und/oder unregelmäßigen zeitlichen Abständen umfasst.

9. Tragwerk nach einem der Ansprüche 1 bis 8, **dadurch gekennzeichnet, dass** die Überwachung der Tragwerkbelastung automatisch erfolgt.

10. Tragwerk nach einem der Ansprüche 1 bis 9, **dadurch gekennzeichnet, dass** die Vorrichtung zur Messung und/oder zur Überwachung der Tragwerkbelastung die gemessenen Tragwerkbelastungswerte anzeigt und/oder
dass die Vorrichtung zur Messung und/oder zur Überwachung der Tragwerkbelastung die gemessenen Tragwerkbelastungswerte an eine Überwachungsstation, beispielsweise die Feuerwahr, übermittelt und/oder
dass die Vorrichtung zur Messung und/oder zur Überwachung der Tragwerkbelastung bei Erreichen einer - vorzugsweise einstellbaren - Belastungsgrenze ein Warnsignal, beispielsweise optisch und/oder akustisch, ausgibt und/oder
dass die Vorrichtung zur Messung und/oder zur Überwachung der Tragwerkbelastung ein Netzwerk von Kraftmessvorrichtungen und/oder Abstandsmessvorrichtungen aufweist und/oder
dass die Vorrichtung zur Messung und/oder zur Überwachung der Tragwerkbelastung eine Verarbeitungseinheit, beispielsweise einen PC, zur Verarbeitung der Messwerte mehrerer Kraftmessvorrichtungen und/oder Abstandsmessvorrichtungen aufweist.

11. Gebäude, Dach oder Brücke mit einem Tragwerk nach einem der Ansprüche 1 bis 10.

12. Nachrüstsatz zur Montage an einem Tragwerk, der eine Vorrichtung zur Messung und/oder zur Überwachung der Tragwerkbelastung beinhaltet, wobei
die Vorrichtung zur Messung und/oder zur Überwachung der Tragwerkbelastung zumindest eine Kraftmessvorrichtung, insbesondere eine Wägzelle, aufweist, insbesondere zur Nutzung in einem Tragwerk nach einem der Ansprüche 1 bis 11.

13. Verwendung einer Kraftmessvorrichtung und/oder einer Abstandsmessvorrichtung zur Überwachung der Einsturzgefahr eines Tragwerkes und/oder eines Daches und/oder eines Gebäudes und/oder einer Brücke.
